Europäisches Patentamt

**European Patent Office**

**Office européen des brevets**

(11) Veröffentlichungsnummer: **0 166 894**

A1

(12) **EUROPÄISCHE PATENTANMELDUNG**

(21) Anmeldenummer: **85104928.8**

(22) Anmeldetag: **23.04.85**

(51) Int. Cl.⁴: **B 60 K 41/08**

(30) Priorität: **30.05.84 DE 3420126**

(43) Veröffentlichungstag der Anmeldung:
**08.01.86 Patentblatt 86/2**

(84) Benannte Vertragsstaaten:
**DE FR GB IT SE**

(71) Anmelder: **ROBERT BOSCH GMBH**
**Postfach 50**
**D-7000 Stuttgart 1(DE)**

(72) Erfinder: **Schwab, Manfred, Dr. Dipl.-Phys.**
**Hallstattweg 1**
**D-7016 Gerlingen(DE)**

(54) **Verfahren zum Steuern des Schaltablaufs bei einem automatischen Stufengetriebe beim Rückschalten.**

(57) Es wird ein Verfahren zur Steuerung des Schaltablaufs bei einem automatischen Stufengetriebe mit vorgeschaltetem hydrodynamischen Wandler beim Rückschalten mit Zugkraftunterbrechung vorgeschlagen, wobei ein Motoreingriff zur Reduzierung eines Momentensprungs vorzugsweise durch eine Zündzeitpunktverstellung ($\alpha$) erfolgt. Das Motormoment (M) wird durch diesen Motoreingriff sofort beim Auftreten eines Schaltsignals (S) nach einer vorgegebenen Funktion reduziert und anschließend wieder auf den ursprünglichen Wert gebracht. Als zusätzliche Maßnahme wird das Schaltsignal (S) zeitlich verzögert, so daß es erst nach dieser Verzögerung im Getriebe wirksam wird (S'). Auf diese Weise wird die abfallende Flanke des Abtriebsmoments (M) verflacht, die Synchronisation hinausgezögert und dadurch der zeitliche Abstand zwischen abfallender und ansteigender Flanke des Abtriebsmoments vergrößert. Dies führt zu einer deutlichen Komfortverbesserung des Schaltvorganges.

EP 0 166 894 A1

./...

FIG.2

R. 12 121
15.5.1984 Ve/Hm

ROBERT BOSCH GMBH, 7000 STUTTGART 1

Verfahren zur Steuern des Schaltablaufs bei einem automatischen Stufengetriebe beim Rückschalten

Stand der Technik

Die Erfindung geht aus von einem Verfahren zum Steuern des Schaltablaufs bei einem automatischen Stufengetriebe mit vorgeschaltetem hydrodynamischen Wandler beim Rückschalten mit Zugkraftunterbrechung nach der Gattung des Hauptanspruchs. Ein solches Verfahren, bei dem ein Motoreingriff zur Reduzierung eines Momentensprungs und dadurch zur Komfortverbesserung erfolgt, ist aus der DE-OS 29 34 477 oder aus Bosch Technische Berichte, Band 7 (1983) Heft 4 bekannt. Bei den bekannten Verfahren erfolgt der Motoreingriff durch Spätverstellen des Zündzeitpunkts im Bereich des Synchronpunkts, also wenn die Getriebeeingangsdrehzahl die Synchrondrehzahl des neuen Gangs erreicht hat. Vor allem Rückschaltungen bei großer Last und niedriger Drehzahl, also bei hohem Wandlerschlupf, sind durch eine sehr kurze Zugkraftunterbrechung charakterisiert, wobei beim Öffnen einer Kupplung (oder Bremse) durch das Schaltsignal ein erster, negativer Momentensprung und kurz danach ein positiver Momentensprung bei

. . .

Erreichen der Synchrondrehzahl erfolgt. Dieser zweite Momentensprung kann zwar durch das bekannte Verfahren gemildert
werden, jedoch werden die beiden kurz aufeinanderfolgenden
Momentenflanken als unangenehm für den Komfort des Schaltens
beurteilt. Bei hydraulisch gesteuerten Getrieben wird zwar
durch klein dimensionierte Blenden an der zu entleerenden
Kupplung versucht, den unangenehmen Effekt infolge der
kurz aufeinanderfolgenden Momentensprünge zu reduzieren,
jedoch sind diesen Maßnahmen durch die starke Abhängigkeit von der Temperatur und beispielsweise vom Drehzahlbereich, in dem der Schaltvorgang abläuft, enge Grenzen
gesetzt.

Vorteile der Erfindung

Das erfindungsgemäße Verfahren mit den kennzeichnenden
Merkmalen des Hauptanspruchs hat demgegenüber den Vorteil,
daß durch einen Motoreingriff zu Beginn des Schaltvorgangs der Momentenabfall abgeflacht und die Zugkraftunterbrechung etwas verlängert wird, wodurch eine deutliche Verbesserung des Schaltkomforts erreicht wird.

Durch die in den Unteransprüchen aufgeführten Maßnahmen
sind vorteilhafte Weiterbildungen und Verbesserungen des
im Hauptanspruch angegebenen Verfahrens möglich. Besonders
vorteilhaft für den Komfort erweist sich ein zusätzlicher
Motoreingriff gemäß dem angegebenen Stand der Technik
beim Synchronpunkt.

Zeichnung

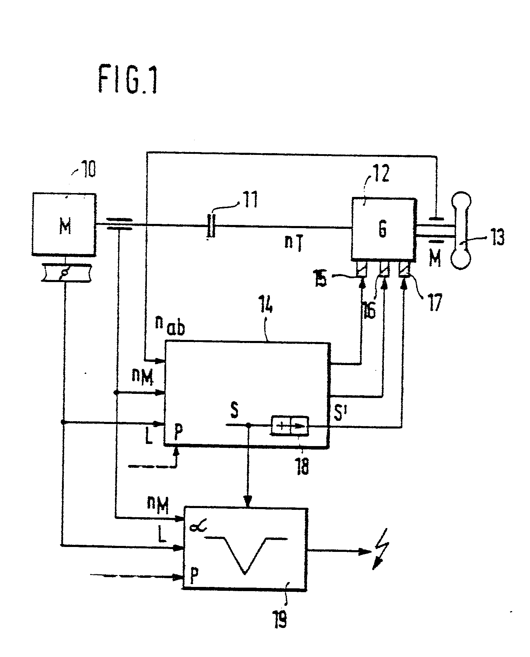

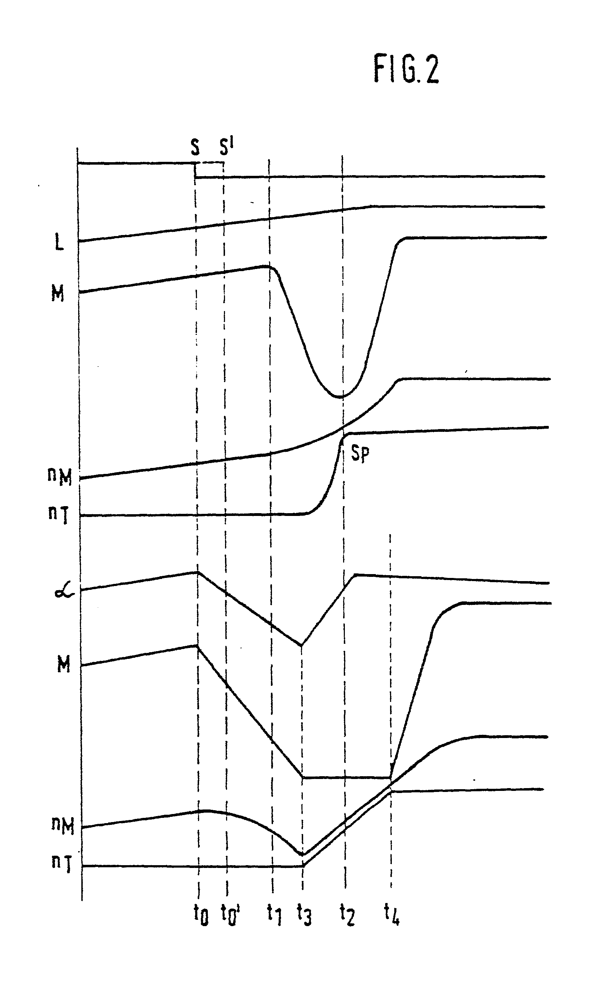

Ein Ausführungsbeispiel der Erfindung ist in der Zeichnung
dargestellt und in der nachfolgenden Beschreibung näher
erläutert. Es zeigen Figur 1 ein Blockschaltbild des Ausführungsbeispiels und Figur 2 ein Signaldiagramm zur Erläuterung der Wirkungsweise eines Rückschaltvorgangs mit
Zugkraftunterbrechung.

- 3 - 19426894

Beschreibung des Ausführungsbeispiels

Das in Figur 1 dargestellte Blockschaltbild zeigt einen
Motor (Brennkraftmaschine) 10, der über einen hydrodynamischen Wandler 11 ein automatisches Stufengetriebe 12
antreibt. Dieses wiederum treibt ausgangsseitig die
Räder eines Fahrzeugs an, die symbolisch als ein Rad 13
dargestellt sind. Einem elektronischen Steuergerät 14 zur
Steuerung des Stufengetriebes 12 sind die Motordrehzahl $n_M$,
die Getriebeabtriebsdrehzahl $n_{ab}$ sowie die Motorlast L zugeführt. Eine unterbrochene Linie deutet die Zuführung weiterer Parameter P bzw. Einflußgrößen an. Dies sind z.B.
Programm-Schalter, Kickdown-Schalter und Temperaturwerte.
In Abhängigkeit der Eingangsparameter erzeugt das elektronische Steuergerät 14 Schaltsignale zum Einlegen der
gewünschten, bzw. erforderlichen Getriebegänge. Dies erfolgt über Magnetventile 15 bis 17, deren Zahl natürlich
von der Zahl der vorgesehenen Getriebegänge abhängt. Durch
diese Magnetventile werden hydraulisch betätigbare Kupplungen bzw. Bremsen im Stufengetriebe 12 gesteuert, wodurch
die Gänge eingelegt werden. Da diese Vorgänge allgemein
bekannt und im eingangs angegebenen Stand der Technik näher
beschrieben sind, wird auf eine detailliertere Darstellung verzichtet.

Die Rückschaltsignale S werden zeitverzögert als Signale
S' dem Getriebe 12 zugeführt, was durch ein Zeitverzögerungsglied 18 kenntlich gemacht ist. Da das elektronische
Steuergerät 14 jedoch üblicherweise als Mikrorechner ausgebildet ist, wird diese Zeitverzögerung gewöhnlich durch
eine Zeitverzögerungsfunktion realisiert.

...

Weiterhin ist das Schaltsignal S einem Zündsteuergerät
19 zugeführt, das einen Funktionsgenerator beinhaltet,
durch den bei Auftreten eines Rückschaltsignals S der
Zündzeitpunkt nach einer vorgegebenen Funktion, im einfachsten Falle nach einer vorgegebenen Zeitfunktion,
zunächst nach spät und anschließend wieder nach früh verstellt wird. Dadurch wird das Motormoment reduziert und
danach wieder auf den alten Wert gebracht. Ein solcher
Motoreingriff ist prinzipiell aus dem angegebenen Stand
der Technik bekannt und dort näher beschrieben. Das Zündsteuergerät 19 steuert natürlich ansonsten die Zündungsfunktion in Abhängigkeit der Motordrehzahl, der Last
und weiterer, üblicher für die Zündungsfunktionen benötigter Parameter P. Anstelle des Eingriffs in die Zündanlage kann zusätzlich oder alternativ auch ein Eingriff
in das Kraftstoffgemisch vorgenommen werden, z.B. durch
Verkürzung der Einspritzimpulse, Eingriff in die Drosselklappenstellung, Reduzierung der Luftzufuhr, insbesondere der Ladeluft usw. Diese Eingriffe können
natürlich vorzugsweise ebenfalls nach vorgegebenen
Funktionen erfolgen.

Die Wirkungsweise des in Figur 1 dargestellten Ausführungsbeispiels soll im folgenden anhand des in Figur 2
dargestellten Signaldiagramms am Beispiel einer Freilaufschaltung erläutert werden. Zunächst sollen die Verhältnisse ohne Motoreingriff anhand der ersten fünf Signalverläufe gezeigt werden. Bei langsamer Erhöhung der
Motorlast L vergrößert sich entsprechend der Schlupf
im Wandler 11 ($n_M-n_T$) und das Getriebeabtriebsmoment M
steigt an. Zum Zeitpunkt to wird eine im Rechner vorgegebene Schaltkennlinie geschnitten, wodurch ein
Schaltsignal S erzeugt wird. Mit einer gewissen Verzögerungszeit, bedingt durch das hydraulische System,
beginnt sich die Kupplung des bisher vorliegenden Gangs

...

bis zum Zeitpunkt t1 zu entleeren. Das Abtriebsmoment M wird danach reduziert und die Zugkraft unterbrochen. Durch den hohen Schlupf im Wandler hat die Motordrehzahl $n_M$ schon bei Schaltbeginn nahezu die Synchrondrehzahl erreicht. Ab dem Zeitpunkt t1, bei Unterbrechung der Zugkraft, wird daher die Wandlerausgangsdrehzahl $n_T$ in sehr kurzer Zeit auf die Synchrondrehzahl hochgezogen und erreicht zum Zeitpunkt t2 den Synchronpunkt SP. Ab diesem Zeitpunkt greift der Freilauf des Getriebes wieder und die Zugkraftunterbrechung ist beendet. Das Abtriebsmoment steigt wieder sehr stark an, und im Wandler 11 stellt sich wieder ein Schlupf ein.

Der kurz aufeinander erfolgende starke Abfall und anschließend wieder steile Anstieg des Abtriebsmoments wird vom Fahrer eines Fahrzeugs als besonders unangenehm empfunden und wirkt sich daher als Verschlechterung des Schaltkomforts aus.

Die unteren vier, in Figur 2 dargestellten Kurvenverläufe zeigen die Verhältnisse mit Motoreingriff. Das Schaltsignal S wird nunmehr durch das Verzögerungsglied 18 verzögert und steuert erst als verzögertes Signal S' das Getriebe 12. Stattdessen wird über einen Motoreingriff, sofort das Motormoment entsprechend einer vorgegebenen Zeitfunktion durch kontinuierliche Verstellung des Zündzeitpunkts nach spät reduziert. Durch diese Reduktion des Motormoments wird sowohl die abfallende Flanke des Abtriebsmoments M abgeflacht, wie auch der Schlupf im Wandler durch Absinken der Motordrehzahl $n_M$ verkleinert und somit die schlagartige Synchronisation vermieden. Der zeitliche Abstand zwischen der abfallenden und der ansteigenden Flanke

...

des Abtriebsmomentes M vergrößert sich. Nach vorgegebener Zeit, insbesondere bei Einsetzen der Zugkraftunterbrechung zum Zeitpunkt t3, wird das Motormoment
durch kontinuierliche Rückverstellung des Zündwinkels $\alpha$
wieder auf den ursprünglichen Wert gebracht. Eine
Zeitsteuerung ist deshalb einsetzbar, da nunmehr auf
kleine Blenden für die Kupplungssteuerung verzichtet
werden kann, wodurch der Entleerungsvorgang der Kupplung nur in geringem Maße von der Temperatur abhängt.

Bei Einsetzen der Zugkraftunterbrechung zum nunmehr
gegenüber dem Zeitpunkt t' verzögerten Zeitpunkt t3 ist
das Abtriebsmoment bereits auf einen sehr kleinen Wert
abgefallen. Die Getriebeeingangsdrehzahl $n_{\_}$ steigt infolge
der zu diesem Zeitpunkt niedrigeren Motordrehzahl $n_m$
langsamer an und erreicht erst zum Zeitpunkt t4 die
Synchrondrehzahl des neuen Gangs, wodurch die Zugkraftunterbrechung beendet wird.

In weiterer Ausgestaltung der Erfindung kann die vorgegebene Funktion zur Abregelung des Motormoments,
die insbesondere eine Zeitfunktion ist, sowie die zeitliche Verzögerung des Schaltsignals von Betriebsparametern,
insbesondere von der Motorlast L und der Motordrehzahl $n_m$
abhängig gemacht werden.

Eine besonders komfortable Schaltung wird dadurch erreicht,
daß neben dem erfindungsgemäßen Motoreingriff ab dem Schaltsignal ein weiterer Motoreingriff im Bereich des Synchronpunkts vorgesehen wird, wie er im angegebenen Stand der
Technik näher beschrieben ist.

R. 19421
15.5.1984 Ve/Hm


ROBERT BOSCH GMBH, 7000 STUTTGART 1


Ansprüche


1. Verfahren zum Steuern des Schaltablaufs bei einem automatischen Stufengetriebe mit vorgeschaltetem hydrodynamischem
Wandler beim Rückschalten mit Zugkraftunterbrechung, wobei
ein Motoreingriff zur Reduzierung eines Momentensprungs
erfolgt und wobei beim Auftreten eines Schaltsignals wenigstens eine Steuerkupplung im Stufengetriebe entsprechend
dem einzulegenden Getriebegang betätigt wird, dadurch
gekennzeichnet, daß bei Auftreten eines Schaltsignals
(S) durch einen Motoreingriff das Motormoment nach einer
vorgegebenen Funktion reduziert und anschließend wieder
im wesentlichen auf den ursprünglichen Wert gebracht
wird, und daß das Schaltsignal (S) vorzugsweise zeitlich
verzögert im Getriebe wirksam wird.


2. Verfahren nach Anspruch 1, dadurch gekennzeichnet,
daß die vorgegebene Funktion eine Zeitfunktion ist.


3. Verfahren nach Anspruch 1 oder 2, dadurch gekennzeichnet, daß die vorgegebene Funktion eine stetige,
vorzugsweise lineare Funktion ist.


4. Verfahren nach einem der vorhergehenden Ansprüche,
dadurch gekennzeichnet, daß der Motoreingriff durch
Verstellung des Zündzeitpunkts und oder durch Beeinflussung des Kraftstoffgemisches erfolgt.


. . .

0166894

5. Verfahren nach einem der vorhergehenden Ansprüche, dadurch gekennzeichnet, daß die vorgegebene Funktion und/oder die zeitliche Verzögerung des Schaltsignals von Motorparametern, insbesondere von Motorlast und Motordrehzahl abhängt.

6. Verfahren nach einem der vorhergehenden Ansprüche, dadurch gekennzeichnet, daß die Reduzierung des Motormoments bis zum Erreichen der neuen Kupplungsstellung infolge des Schaltsignals andauert.

7. Verfahren nach einem der vorhergehenden Ansprüche, dadurch gekennzeichnet, daß in an sich bekannter Weise ein zusätzlicher Motoreingriff am Synchronpunkt erfolgt.

19421

0166894

FIG.1

19421

0166894

# FIG.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | FR-A-2 225 310 (C.A.V. LTD.) <br> * Seite 6, Zeilen 12-28; Seite 13, Zeilen 7-14; Ansprüche 8-14; Figuren * | 1-4,7 | B 60 K 41/08 |
| A | DE-A-3 142 713 (R. BOSCH) <br><br> * Ansprüche; Seiten 9,10; Figuren 1a-5a * | 1,2,4-7 | |
| A,D | GB-A-2 057 603 (R. BOSCH) <br> * Insgesamt * | 1,7 | |
| A | FR-A-2 193 364 (C.A.V. LTD.) <br> * Ansprüche; Figuren * | 1-4 | |
| A | DE-A-2 941 556 (SACHS SYSTEMTECHNIK) | | RECHERCHIERTE SACHGEBIETE (Int. Cl 4) <br><br> B 60 K |
| A | FR-A-2 062 839 (NISSAN MOTOR CO.) | | |

Der vorliegende Recherchenbericht wurde für alle Patentansprüche erstellt

| Recherchenort <br> DEN HAAG | Abschlußdatum der Recherche <br> 12-09-1985 | Prüfer <br> VOGT-SCHILB G.J.F. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82